# EUROPÄISCHE PATENTANMELDUNG

(11) **EP 1 486 381 A2**
(43) Veröffentlichungstag der Anmeldung: **15.12.2004**
(21) Anmeldenummer: 04013464.5
(22) Anmeldetag: 08.06.2004
(51) Int. Cl.: B60R 19/34

(54) **Kraftfahrzeugstossfänger**

(30) Priorität: 13.06.2003 DE 10326783
(71) Anmelder: Innotec Forschungs- und Entwicklungs-GmbH, 95615 Marktredwitz (DE); REHAU AG + Co, 95111 Rehau (DE)
(72) Erfinder: Steeg, Claus Christian, 08606 Oelsnitz (DE); Walther, Reinhard, 95709 Leupoldsdorf (DE)
(74) Vertreter: Klunker . Schmitt-Nilson . Hirsch

(57) **Zusammenfassung**

Stoßfänger (10) zum Anschluss an eine tragende Struktur (18) einer Kraftfahrzeugkarosserie und zum Übertragen einer Kraft im Wesentlichen in der Richtung der Längsachse des Fahrzeugs, aufweisend eine Entkopplungseinrichtung (28) mit einem ersten und einem zweiten in Kraftrichtung relativ zueinander verlagerbaren Kraftübertragungselement (22, 24), einer Sperreinrichtung (26), die das erste und das zweite Kraftübertragungselement (22, 24) relativ zueinander versperrt, und einer an der Sperreinrichtung (26) angeschlossenen Entsperreinrichtung (30), welche die Versperrung zwischen dem ersten und dem zweiten Kraftübertragungselement (22, 24) aufhebt und eine Relativbewegung zwischen beiden zulässt.

## Beschreibung

Die vorliegende Erfindung betrifft Stoßfänger zum Anschluss an eine Kraftfahrzeugkarosserie und zum Übertragen einer Kraft im Wesentlichen in der Richtung der Längsachse des Fahrzeugs, einer Kraft, wie sie beispielsweise bei einer Kollision des Fahrzeugs auftritt. Die Erfindung betrifft insbesondere Stoßfänger, die für eine Kollision mit Fußgängern oder Radfahrern, etc. optimiert sind.

Aktuelle Kraftfahrzeuge und insbesondere Personenkraftwagen haben eine an der tragenden Struktur der Kraftfahrzeugkarosserie angeschlossene Stoßfängerkonstruktion zum Abbau und Übertragen von Kollisionskräften auf die tragende Struktur der Fahrzeugkarosserie. Typischerweise umfasst bei modernen Fahrzeugen eine derartige Stoßfängerkonstruktion von außen nach innen betrachtet eine Stoßfängerabdeckung, typischerweise aus einem Kunststoffmaterial mit einer Gesichtsseite, die nach außen exponiert ist und von dem Betrachter als der eigentliche Stoßfänger verstanden wird. Diese Stoßfängerabdeckung ist typischerweise derart ausgelegt, dass sie Kollisionen im sehr langsamen Geschwindigkeitsbereich beispielsweise bis typischerweise 5, 8 oder 10 km/h ohne eine wesentliche Beschädigung aufnehmen kann. Für Kollisionen bei höherer Geschwindigkeit ist innen von dieser Stoßfängerabdeckung ein Biegebalken oder Stoßfängerträger vorgesehen, der an zwei oder mehreren Stellen von je einem Stoßfänger gegen die Kraftfahrzeugkarosserie abgestützt ist. In derartigen Stoßfängern ist typischerweise ein Absorber vorgesehen, der ab einer bestimmten Kollisionsgeschwindigkeit Kollisionsenergie abbaut und vernichtet, beispielsweise indem Verformungsarbeit durch Verbiegen, Umstülpen, etc. geleistet wird. Ein anderes Absorberprinzip basiert auf dem Prinzip des Abbaus der Kollisionsenergie durch das Leisten von Zerspanungsarbeit. Dabei befinden sich Zerspanmesser mit einem Zerspanelement in Eingriff und zerspanen bei einer Relativbewegung zwischen dem Zerspanelement und den Zerspanmessern das Zerspanelement. Ein derartiger Absorber hat einen sehr hohen Wirkungsgrad, und durch eine optimale Materialpaarung zwischen den Zerspanmessern und dem Zerspanelement lassen sich sehr gezielt Kraftverläufe über den Absorberweg einstellen und optimieren. Typischerweise sind die Zerspanmesser an der tragenden Struktur der Kraftfahrzeugkarosserie angeschlossen, während das Zerspanelement ein im Wesentlichen längliches Element ist, das an dem Biegebalken angeschlossen ist und im Falle einer Kollision gegen die Zerspanmesser verschoben wird.

Es wurde bereits erwähnt, dass die Stoßfängerabdeckung in sehr niedrigen Geschwindigkeitsbereichen im Wesentlichen die Kollisionsenergie aufnimmt und abbaut. Die Stoßfängerabdeckung ist relativ weich, so dass es in diesem Geschwindigkeitsbereich bei Kollisionen mit ungeschützten Personen, wie beispielsweise Fußgängern, Radfahrern, etc., nicht zu erheblichen Verletzungen als unmittelbare Folge des Aufpralls kommt. Anders sieht die typische Unfallcharakteristik bei höheren Aufprallgeschwindigkeiten bis beispielsweise 40 km/h aus. In diesem Geschwindigkeitsbereich wirkt der Biegebalken wie ein starrer Rammbock und verursacht erhebliche Verletzungen insbesondere im Bereich der unteren Extremitäten bei den genannten Personengruppen, die der Einfachheit halber nachfolgend als "Fußgänger" bezeichnet werden.

Es ist deshalb die Aufgabe der vorliegenden Erfindung, einen Stoßfänger bereitzustellen, der das Verletzungsrisiko von Fußgängern bei Kollisionen mit Kraftfahrzeugen verringert.

Erfindungsgemäß wird diese Aufgabe gelöst durch einen Stoßfänger zum Anschließen an eine tragende Struktur einer Kraftfahrzeugkarosserie und zum Übertragen einer Kraft im Wesentlichen in der Richtung der Längsachse des Fahrzeugs, aufweisend eine Entkopplungseinrichtung mit einem ersten und einem zweiten in Kraftübertragungsrichtung relativ zueinander verlagerbaren Kraftübertragungselement, einer Sperreinrichtung, die das erste und das zweite Kraftübertragungselement relativ zueinander versperrt, und eine an der Sperreinrichtung angeschlossenen Entsperreinrichtung, welche die Versperrung zwischen dem ersten und dem zweiten Kraftübertragungselement aufhebt und eine Relativbewegung zwischen beiden zulässt.

Wie bereits erwähnt, handelt es sich bei der Kraft im Wesentlichen um eine bei einer Kollision auftretenden Kollisionskraft. Diese ist typischerweise bei dem Aufprall auf einen vorderen Stoßfänger in Längsrichtung des Fahrzeugs gerichtet, wobei eine mehr oder minder starke Lateralkomponente vorhanden sein kann. Es mag Situationen geben, in denen derartige Stoßfänger seitlich am Fahrzeug vorgesehen sind, so dass die Hauptkraftrichtung eher rechtwinklig zur Längsachse vorgesehen ist. Die Entkopplungseinrichtung erfüllt den Zweck, in bestimmten Situationen die Kraftübertragung von dem Stoßfänger auf die tragende Struktur der Kraftfahrzeugkarosserie aufzuheben. Bei der vorangehend geschilderten Stoßfängerkonstruktion moderner Kraftfahrzeuge hat das zur Folge, dass über den Biegebalken im Wesentlichen keine Kraft auf den Fußgänger übertrage wird. Vielmehr wird die Kollisionsenergie im Wesentlichen über die relativ weiche Stoßfängerabdeckung aufgenommen und übertragen. Es ist einsichtig, dass das Verletzungsrisiko für den Fußgänger auf diese Weise deutlich minimiert ist. Die Entkopplungseinrichtung ist grundsätzlich so aufgebaut, dass Kollisionskräfte, die an dem vorderen oder karosseriefernen, freien Ende des Stoßfänders aufgebracht werden, mehr oder weniger gedämpft auf die tragende Struktur der Kraftfahrzeugkarosserie übertragen werden. Die Dämpfung kann beispielsweise durch einen Absorber erfolgen, der in den Stoßfänger integriert sein kann. Die Entkopplungseinrichtung weist zu diesem Zweck eine Sperreinrichtung auf, die ein erstes Kraftübertragungselement und ein zweites relativ zu dem ersten Kraftübertragungselement verlagerbares Kraftübertragungselement relativ zueinander versperrt, so dass die Kraftübertragung - gedämpft oder ungedämpft - erfolgen kann.

Die Versperrung der Sperreinrichtung kann durch eine Entsperreinrichtung aufgehoben werden. Die Entsperreinrichtung kann mit Sensoren zusammenwirken, beispielsweise einem Geschwindigkeitssensor, einem oder mehreren Kollisionssensoren etc. Vergleichbare Sensorsysteme sind bei aktiven Fronthaubensystemen bereits im Einsatz, die im Falle der Kollision des Fahrzeugs mit einem Fußgänger die Fronhaube anheben, um bei einem Sekundäraufprall des Fußgängers auf das Fahrzeug die Verletzungen des Fußgängers zu reduzieren. Diese Sensoren können auch für die Aktivierung des Stoßfängers herangezogen werden, wobei die Geschwindigkeitsbereiche, bei denen eine Aktivierung erfolgt, oder andere Kriterien, anders als bei den aktiven Fronthabensystemen, ggf. auch in gleicher Weise gewählt sein können.

Es ist günstig, die Entkopplungseinrichtung derart an das Sensorsystem anzuschließen, dass es zu einer Auslösung der Entsperreinrichtung und somit zu einer Freigabe der Relativbewegung zwischen dem ersten und dem zweiten Kraftübertragungselement nur in einem gewissen vorgegebenen Geschwindigkeitsfenster kommt. Oberhalb einer bestimmten Geschwindigkeit sind einerseits die Aufprallfolgen für den Fußgänger praktisch unabhängig davon, ob der Stoßfänger nachgibt oder nicht. Andererseits muss bei höheren Aufprallgeschwindigkeiten mit Blick auf den Schutz der Fahrzeuginsassen die vorgegebene Absorptionscharakteristik des Stoßfängers zum Einsatz kommen, zumal Sensorsysteme nicht in der Lage sind, zwischen einem Aufprall auf einen Fußgänger und dem Aufprall auf eine Wand zu unterscheiden. Die Geschwindigkeitsbereiche, bei denen die Entkopplungseinrichtung den Kraftweg zwischen dem karosseriefernen Ende des Stoßfängers und der Karosserie entkoppelt bzw. beibehält, können die gleichen Geschwindigkeitsbereiche sein, wie sie für eine entsprechende Sicherheits-Fronthaube implementiert sind. Es können jedoch andere Geschwindigkeitsbereiche je nach der Konstruktion des Fahrzeugs bzw. des Stoßfängers bzw. der Stoßfängerkonstruktion zum Einsatz kommen.

Ein wesentlicher Punkt bei der Konstruktion eines derartigen Stoßfängers ist es, die Auslösezeiten bis zu einer kompletten Entkopplung des Kraftwegs ausreichend kurz auszulegen. Hier sind Zeiträume bis zur Entkopplung von 30 ms und weniger erwünscht.

Vorzugsweise weist der Stoßfänger eine Rückzieheinrichtung auf, die zwischen dem ersten und dem zweiten Kraftübertragungselement derart angeschlossen ist, dass sie nach dem Aufheben der Sperrung zwischen dem ersten und dem zweiten Kraftübertragungselement aktiv eine Relativbewegung zwischen beiden bewirkt. Ohne die Verwendung einer Rückzieheinrichtung wird der Stoßfänger lediglich "weich" und kann bei dem Aufprall mit dem Fußgänger zurückgeschoben werden. Bei der Verwendung einer Rückzieheinrichtuhg wird der Stoßfänger aktiv eine gewisse Strecke, beispielsweise einige wenige cm bis zu 10 cm und mehr zurückgezogen, so dass ein wesentlicher Teil der Aufprallenergie im Verlauf der Verformung einer Stoßfängerabdeckung aufgenommen werden kann. Andererseits ist es auch möglich, auf die Rückzieheinrichtung zu verzichten und den Stoßfänger selbst mit einer elastischen Dämpfungseinrichtung auszubilden, die nach der Entkopplung des direkten Kraftwegs zur Karosserie eine elastisch nachgiebige Kraft dem Aufprall des Fußgängers entgegensetzt. Eine derartige Dämpfungseinrichtung kann beispielsweise eine Feder oder ein elastisches Material, beispielsweise ein Schaummaterial, aufweisen.

Vorzugsweise weist die Rückzieheinrichtung eine vorgespannte Feder auf. Besonders bevorzugt ist eine vorgespannte Schraubenfeder, eine derartige Feder lässt sich relativ einfach und kostengünstig herstellen und ist leicht zu installieren.

Vorzugsweise weist der Stoßfänger einen Absorber auf, wobei es besonders bevorzugt ist, die Entkopplungseinrichtung als einen Bestandteil des Absorbers auszubilden. Bei einer derartigen integrierten Konstruktion lassen sich Bauraum und Herstellungsaufwand verringern.

Vorzugsweise arbeitet der Absorber nach dem vorangehend bereits erwähnten Zerspanungsprinzip und weist vorzugsweise ein Zerspanelement und ein mit diesem im Eingriff befindliches Zerspanmesser auf. Es ist besonders bevorzugt, wenn das Zerspanelement ein Bestandteil des zweiten Kraftübertragungselements ist und das Zerspanmesser ein-Bestandteil der Sperreinrichtung ist. Es ist besonders günstig, gerade bei Absorbern, die nach dem Zerspanprinzip arbeiten, eine derartige Entkopplungseinrichtung vorzusehen, da derartige Einrichtungen häufig einen im Wesentlichen rechtwinkligen Kraft-Wegverlauf über den Absorberweg aufweisen, so dass bei dem Anprall des Fußgängers auf den Stoßfänger erst eine Schwellenwertkraft überschritten werden muss, bevor der Absorber zusammengedrückt wird und sich der Stoßfänger verlagert. Dieser Schwellenwert ist typischerweise relativ hoch. Vorzugsweise ist ein längliches erstes Kraftübertragungselement vorgesehen, um welches herum das zweite Kraftübertragungselement angeordnet ist, so dass zwischen den beiden Elementen vorzugsweise eine Führung ausgebildet ist. Es ist besonders günstig, bei einem nach dem Zerspanprinzip arbeitenden Absorber das erste Kraftübertragungselement in der Art eines länglichen Zerspanelements auszubilden, und es ist weiter bevorzugt, um dieses längliche Zerspanelement umfangsmäßig darum herum angeordnete Zerspanmesser vorzusehen, die derart an der Sperreinrichtung angeschlossen sind, dass sie sich normal in einer Eingriffsposition mit dem länglichen Zerspanelement befindet und damit die Sperreinrichtung bildet und so an eine Entsprerreinrichtung angeschlossen sind, dass sie bei einer Auslösung aus diesem Sperreingriff gebracht werden. Vorzugsweise ist das bzw. sind die Zerspanmesser in einer Führung rechtwinklig zur Längsachse des Zerspanelements verlagerbar angeordnet und an die Entsperreinrichtung angeschlossen. Die Entsperreinrichtung kann so ausgebildet sein, dass sie die Zerspanmesser aus der Eingriffsposition in eine Position verlagert, in der die Versperrung zwischen dem ersten und dem zweiten Kraftübertragungselement aufgehoben ist und eine Relativbewegung zwischen beiden zugelassen ist.

Vorzugsweise weist die Entsperreinrichtung eine Steuerkurvenscheibe auf, in der mit den Zerspanmessern zusammenwirkende Steuerkurven vorgesehen sind, die derart ausgebildet sind, das ein Verlagern der Steuerkurvenscheibe die Zerspanmesser aus einer Sperrposition in eine Entsperrposition verlagern kann und umgekehrt. Die Zerspanmesser können beispielsweise Stifte aufweisen, die in die Steuerkurven in der Steuerkurvenscheibe eingreifen und damit durch eine Verlagerung, beispielsweise eine Rotation der Steuerkurvenscheibe, außer Eingriff gezogen werden können. Bei einer derartigen Konstruktion kann die Steuerkurvenscheibe vorzugsweise ein Teil der Führung für das bzw. die Zerspanmesser bilden. Es kann günstig sein, die Steuerkurvenscheibe um die Längsachse des länglichen Zerspanelements drehbar anzuordnen. Bei einer derartigen Konstruktion können die einzelnen Steuerkurven an identischen Radialpositionen vorgesehen sein. Auf diese Weise lässt sich eine besonders einfache Herstellung der Steuerkurvenscheibe realisieren. Außerdem kann die Steuerkurvenscheibe einer derartigen Konstruktion relativ einfach in einer Rotationsführung angeordnet sein. Generell ist es günstig, eine Führung für die Steuerkurvenscheibe vorzusehen.

Alternativ zu der Anordnung der Zerspanmesser verlagerbar in einer Führung rechtwinklig zur Längsachse des Zerspanelements kann es bevorzugt sein, ein oder mehrere Zerspanmesser vorzusehen, die in einer Aufnahme festgelegt sind und von einer Abstützung in der Sperrposition gegen die Kraftübertragungsrichtung gehälten sind. Dabei ist es bevorzugt, die Entsperreinrichtung derart an die Abstützung anzuschließen, dass eine Betätigung der Entsperreinrichtung die Abstützung derart verlagert, dass das bzw. die Zerspanmesser in Kraftübertragungsrichtung freigegeben sind. Dabei kann es günstig sein, die Zerspanmesser um eine Achse drehbar anzuordnen, so das nach der Betätigung der Entsperreinrichtung und nach dem Entfernen der Abstützung die Zerspanmesser aus dem Eingriff mit dem Zerspanelement um die Achse verdreht und außer Eingriff gebracht werden.

Vorzugsweise ist ein Anschlag zwischen dem ersten und dem zweiten Kraftübertragungselement vorgesehen, der nach der Freigabe die Relativbewegung zwischen den beiden Elementen nach einer gewissen vorgegebenen Strecke beendet. Der Anschlag ist besonders dann günstig, wenn eine aktive Rückzieheinrichtung vorgesehen ist, um zu verhindern, dass die Rückbewegung des Stoßfängers von dem Motor, von Hilfsaggregaten oder Anbauteilen gebremst wird und Schäden verursacht.

Vorzugsweise weist die Entsperreinrichtung ein pyrotechnisches Schubelement auf. Pyrotechnische Schubelemente sind in der Lage, relativ hohe Kräfte innerhalb extrem kurzer Zeit bereitzustellen, so dass mit pyrotechnischen Schubelementen ausgestattete Entsperreinrichtung eine relativ hohe Auslösegeschwindigkeit bzw. kurze Auslösezeit realisieren können. Das pyrotechnische Schubelement kenn beispielsweise über eine Schräge derart mit dem ersten oder dem zweiten Kraftübertragungselement gekoppelt sein, dass es zusätzlich die Relativbewegung zwischen den beiden Elementen nach der Entsperrung bewirkt oder unterstützt.

Die Erfindung betrifft ferner ein Kraftfahrzeug, aufweisend einen Stoßfänger gemäß der vorliegenden Erfindung. Ein derartiger Stoßfänger kann beispielsweise auch in der Art eine pufferartigen Elements alleine an dem Fahrzeug vorgesehen sein. Vorzugsweise weist das Kraftfahrzeug jedoch mindestens zwei Stoßfänger und einen mit dem karosseriefernen, freien Ende des Stoßfängers verbundenen Biegebalken auf. Der Biegebalken kann selbst in der Art einer konventionellen Stoßstange exponiert sein. Es ist bevorzugt, wenn eine Stoßfängerabdeckung außerhalb des Stoßfängers bzw. außerhalb des Biegebalkens vorgesehen ist.

Die Erfindung betrifft ferner eine Stoßfängerbaugruppe zum Einbau in ein Kraftfahrzeug, aufweisend mindestens zwei erfindungsgemäße Stoßfänger, einen Biegebalken zum Anschluss an die karosseriefernen, freien Enden der Stoßfänger und eine Stoßfängerabdeckung.

Die Erfindung und Ausgestaltungen der Erfindung werden nachfolgend an Hand eines zeichnerisch dargestellten Ausführungsbeispiels näher erläutert. Es zeigen:
- Fig. 1: eine schematische Schnittansicht durch den Stoßfängerbereich eines Kraftfahrzeugs;
- Fig. 2: einen Längschnitt durch einen erfindungsgemäßen Stoßfänger gemäß einer ersten Ausführungsform;
- Fig. 3: einen Schnitt durch den Stoßfänger gemäß Fig. 2, der an den Linien 3-3 genommen ist;
- Fig. 4: einen Schnitt durch den Stoßfänger der Fig. 2, der an der Linie 4-4 genommen ist;
- Fig. 5: einen Schnitt ähnlich dem von Fig. 3, bei dem die Zerspanmesser außer Eingriff sind;
- Fig. 6: einen Längsschnitt durch den Stoßfänger gemäß Fig. 2 im zurückgezogenen Zustand;
- Fig. 7: eine perspektivische Ansicht eines Stoßfängers gemäß einer zweiten Ausführungsform;
- Fig. 8: einen Längsschnitt durch den Stoßfänger gemäß der zweiten Ausführungsform;
- Fig. 9: einen Schnitt durch den Stoßfänger der zweiten Ausführungsform, der an der Linie 9-9 von Fig. 8 genommen ist;
- Fig. 10: einen Schnitt ähnlich zu dem von Fig. 9, der ebenfalls an der Linie 9-9 genommen ist; und
- Fig. 11: einen Schnitt ähnlich zu dem von Fig. 8, der den Stoßfänger in der zurückgezogenen Position zeigt.

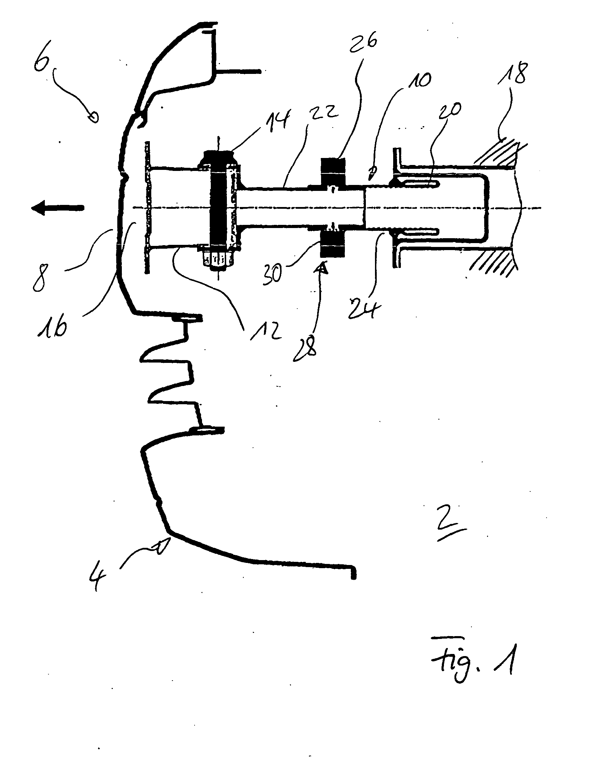

Fig. 1 zeigt einen Teil eines Kraftfahrzeugs 2. Insbesondere zeigt Fig. 1 eine Frontschürze 4 und eine Stoßfängerkonstruktion 6 eines Personenwagens.

Die Stoßfängerkonstruktion 6 weist eine Stoßfängerabdeckung 8, einen Stoßfänger 10 sowie einen Biegebalken 12 auf, der mittels eines Bolzens 14 an dem Stoßfänger 10 angeschlossen ist. Die Stoßfängerabdeckung 8 ist typischerweise aus einem Kunststoffmaterial hergestellt. Die Stoßfängerabdeckung 8 hat eine gewisse Elastizität, und sie ist ferner mit einem gewissen Abstand 16 von dem Biegebalken 12 angeordnet, so dass die Stoßfängerabdeckung 8 bei Kollisionen bei extrem niedriger Geschwindigkeit in der Lage ist, die Kollisionsenergie in Verformungsenergie der Stoßfängerabdeckung 8 umzuwandeln. Die Stoßfängerabdeckung 8 ist elastisch nachgiebig und nimmt nach einem derartigen Aufprall bei langsamer Geschwindigkeit wieder ihre ursprüngliche Form an. Der Stoßfänger 10 ist an seinem rechten Ende in der Darstellung der Fig. 1 an einer tragenden Struktur 18 angeschlossen. Der Stoßfänger 10 weist einen Absorber 20 auf und besitzt zwei in Kraftrichtung relativ zueinander verlagerbare Kraftübertragungselemente 22 und 24. Insbesondere sind die Kraftübertragungselemente 22, 24 teleskopisch ineinander verschiebbar gelagert. Das karosserieseitige Kraftübertragungselement 24 ist an seinem karosserieseitigen Ende an den Absorber 20 angeschlossen bzw. bildet ein integrales Teil von diesem. Zwischen den beiden Kraftübertragungselementen ist eine Sperreinrichtung 26 als Teil einer Entkopplungseinrichtung 28 vorgesehen, die das erste und das zweite Kraftübertragungselement 22, 24 relativ zueinander versperrt, um so eine auf den Biegebalken 12 aufgebrachte Kollisionskraft auf den Absorber 20 und letztlich auf die tragende Struktur 18 der Fahrzeugkarosserie zu übertragen.

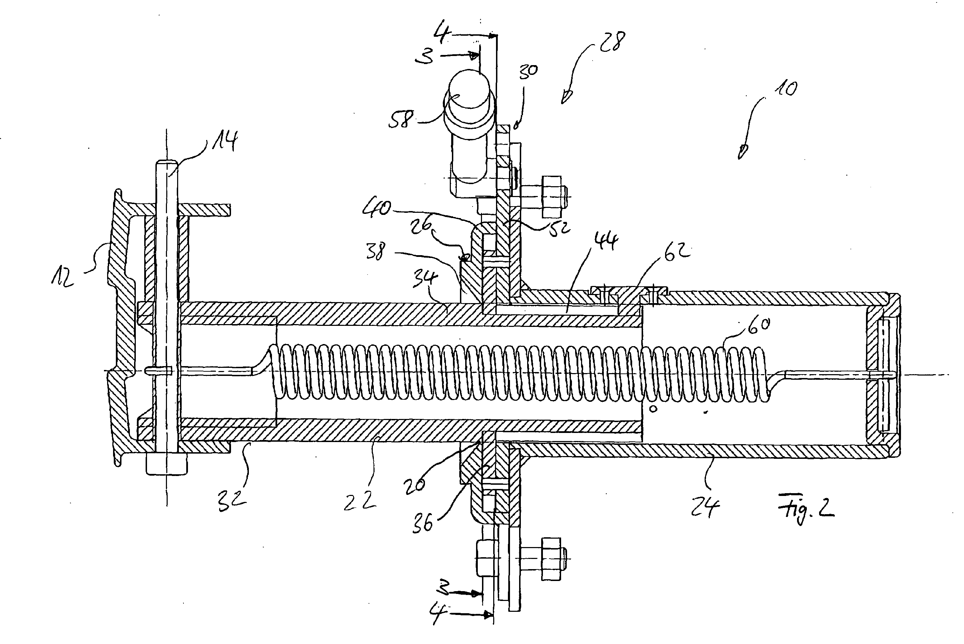

In der "Blackbox" der Entkopplungseinrichtung 28 ist ferner eine Entsperreinrichtung 20 vorgesehen, welche die Versperrung zwischen dem ersten und dem zweiten Kraftübertragungselement aufheben kann und eine Relativbewegung zwischen beiden zulassen kann. In der Fig. 2 ist der Stoßfänger 10 im Längsschnitt gezeigt. Man erkennt ferner den über einen Bolzen 14 angeschlossenen Biegebalken 12 an dem vorderen, freien Ende 32 des Stoßfängers 10. Man erkennt ferner die beiden relativ zueinander verschiebbar gelagerten Kraftübertragungselemente 22 und 24 sowie die Entkopplungseinrichtung 28 mit der Sperreinrichtung 26 und der Entriegelungseinrichtung 30.

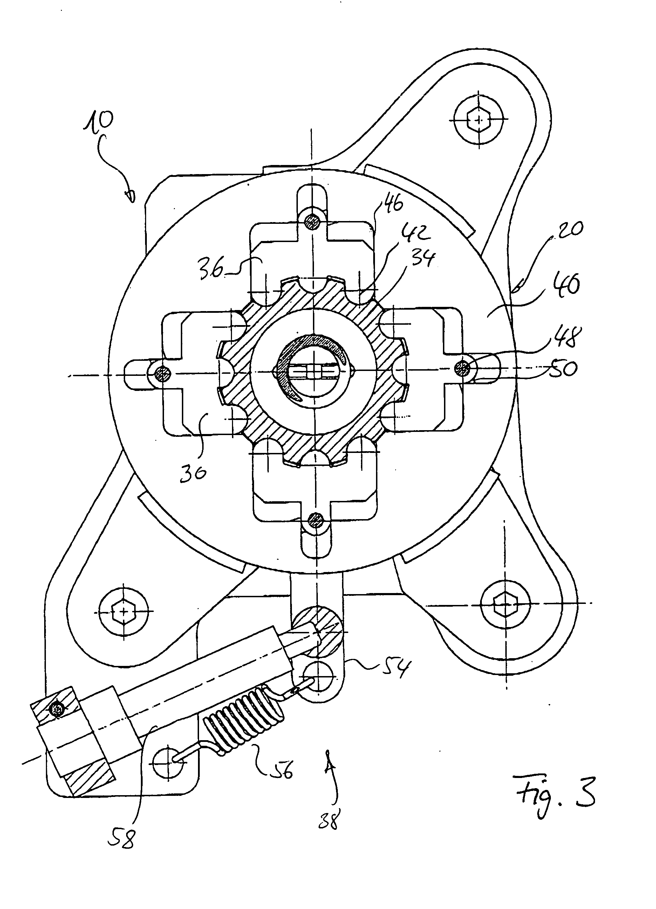

Die Entkopplungseinrichtung 28 bzw. die Sperreinrichtung 26 ist gleichzeitig als Absorber 20 ausgebildet. Zu diesem Zweck ist das erste Kraftübertragungselement 22 aus einem zerspanbaren Material, beispielsweise einem Kunststoffmaterial oder einem relativ weichen Metallmaterial hergestellt. Es ist günstig, das gesamte Kraftübertragungselement 22 aus diesem Material herzustellen. Es ist auch möglich, nur einen Teil davon aus dem zerspanbaren Material herzustellen. Der zerspanbare Teil des Kraftübertragungselements 22 wird nachfolgend als Zerspanelement 34 bezeichnet. Umfangsmäßig um das längliche Zerspanelement 34 angeordnet sind mehrere Zerspanmesser 36 vorgesehen. Wird eine Kollisionskraft über den Biegebalken 12 auf das freie Ende 32 des Kraftübertragungselements 22 bzw. auf das Zerspanelement 34 aufgebracht, wird das Zerspanelement 34 in Richtung nach rechts in der Fig. 2 gegen die Zerspanmesser 36 bewegt und wird von den Zerspanmessern 36 zerspant. Eine abgeschrägte Nut 38, die im Gehäuse 40 vorgesehen ist, erlaubt dem Span ein Austreten nach vorne und verhindert ein Blockieren des Absorbers 20 durch die Späne. In der Fig. 3 ist ein Schnitt durch den Stoßfänger 10 entlang der Linie 3-3 von Fig. 2 gezeigt. Man erkennt insbesondere das Gehäuse 40 der Entkopplungseinrichtung 28 bzw. des Absorbers 20. Man erkennt ferner das Zerspanelement 34, um das mehrere Zerspanmesser 36 angeordnet sind. Des weiteren erkennt man, dass die Zerspanmesser jeweils mehrere halbrundförmige Zerspanschneiden 42 aufweisen, die in entsprechende Nuten 44 (siehe Fig. 2) des Zerspanelements 34 ragen.

Die Zerspanmesser 36 sind in Führungen 46 in dem Gehäuse 40 angeordnet. Die Zerspanmesser 36 sind mittels Stiften 48, die in Steuerkurven 50, die in einer Steuerkurvenscheibe 52 ausgebildet sind, in Radialrichtung, bezogen auf das längliche Zerspanelement 34 festgelegt.

Die Steuerkurvenscheibe 52 weist einen Hebel 54 auf, der mittels einer Schraubenfeder 56 in Sperrposition vorgespannt ist. An den Hebel 54 greift ferner ein pyrotechnisches Schubelement 58 an, welches zum Zweck der Entsperrung von einer (nicht dargestellten) Steuerung im Falle einer Kollision in einem relativ niedrigen Geschwindigkeitsbereich z.B. zwischen 5 und 40 km/h das pyrotechnische Element 58 auslöst. Das pyrotechnische Schubelement 58 schiebt dann explosionsartig dem Hebel 54 und dreht dabei die Steuerkurvenscheibe 52 in der Darstellung der Fig. 3 im Gegenuhrzeigersinn.

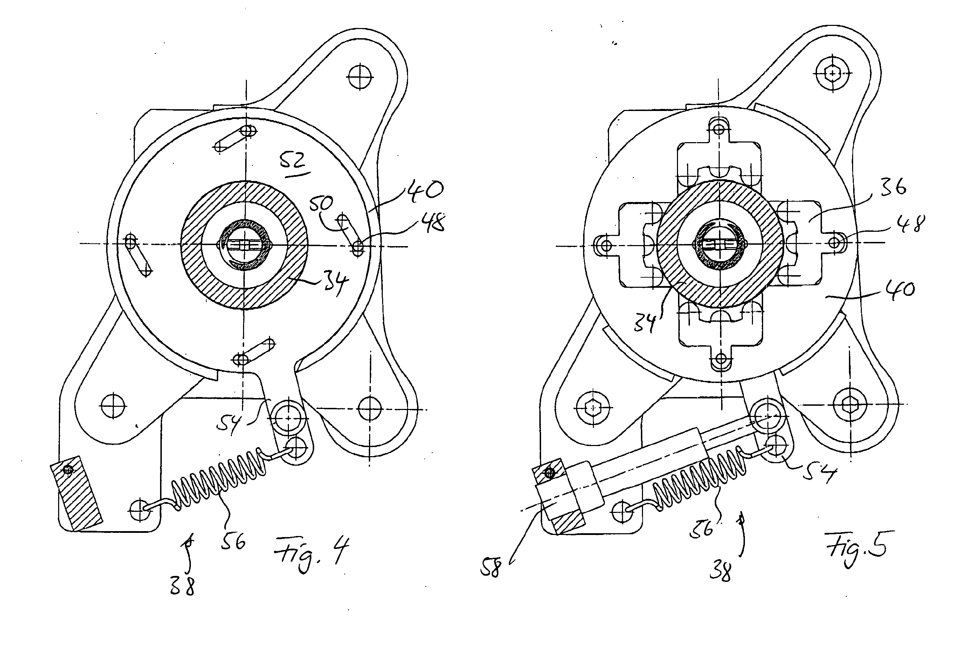

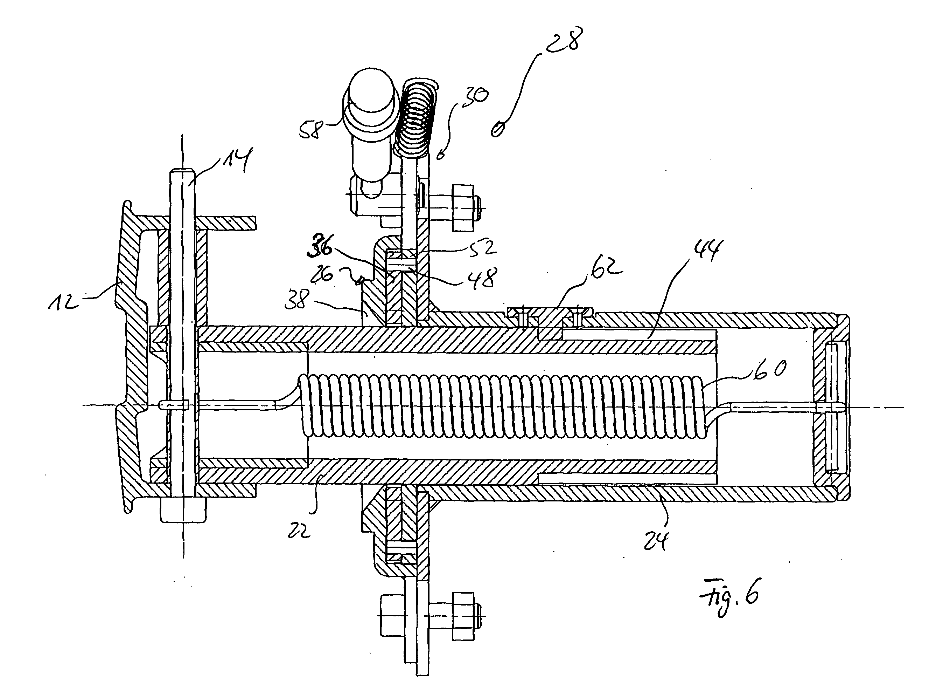

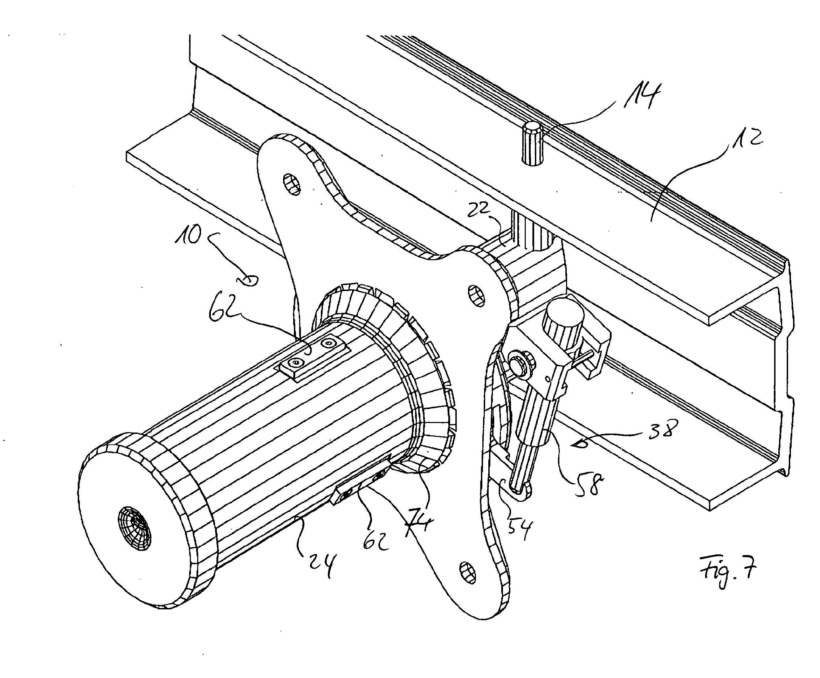

Wie man in der Fig. 4 erkennt, sind die Steuerkurven 50 radial nach außen verlaufend angeordnet, so dass bei einer Verdrehung der Steuerkurvenscheibe 52 im Gegenuhrzeigersinn die Zerspanmesser 36 über den Stift 48 radial nach außen und außer Eingriff mit dem Zerspanelement 34 gezogen werden. Diese Situation ist in der Fig. 5 gezeigt. Insbesondere in der Fig. 2, aber auch in den Figuren 3 bis 5, erkennt man ferner eine Zugfeder 60, die im Zentrum der beiden Kraftübertragungselemente 22, 24 gespannt angeordnet ist und die beiden Kraftübertragungselemente 22, 24 gegeneinander in vorgespannter Position hält. Wird im Falle einer Kollision die Entsperreinrichtung 38 aktiviert und werden die Zerspanmesser 36 außer Eingriff mit dem Zerspanelement 34 gebracht, entspannt sich die Zugfeder 60 und zieht das Kraftübertragungselement 22, welches an dem Biegebalken 12 angeschlossen ist, in Richtung auf die tragende Struktur 18 der Fahrzeugkarosserie. Ein Anschlag 62 (siehe Fig. 6) verhindert, dass insbesondere der Biegebalken 12 im Wesentliche ungebremst zurückgezogen wird und Fahrzeugteile, beispielsweise den Kühler oder Anbauaggregate des Motors oder gar den Motor selbst beschädigen kann. Es ist günstig, wenn der Verschiebeweg zwischen dem ersten und dem zweiten Kraftübertragungselement mindestens 50 bis 100 mm beträgt. Betrachtet man die Fig. 1, so ist der übliche Abstand 16 zwischen der Stoßfängerabdeckung 8 und dem vorderen Ende des Biegebalkens 12 im Bereich von wenigen Millimetern, typischerweise zwischen 5 und 10 mm. Durch die Aktivierung der Entsperreinrichtung 38 und insbesondere durch das aktive Zurückziehen des Kraftübertragungselements 22 bzw. des Biegebalkens 12 wird ein deutlich vergrößerter Spielraum 16 für eine Verformung der Stoßfängerabdeckung 8 bereitgestellt. Folglich können in diesem Geschwindigkeitsbereich schwere Verletzungen an Fußgängern, die durch einen Aufprall auf die im Wesentliche starre Stoßfänger/Biegebalkenstruktur des Stands der Technik aufgetreten sind, deutlich vermindert werden. Die Stoßfängerabdeckung 8 kann die bei Kollisionen mit Fußgängern auftretenden Kollisionsenergien sehr viel nachgiebiger aufnehmen und vernichten als die darunter liegende starre Struktur. Es kann günstig sein, die Stoßfängerabdeckung 8 speziell so auszulegen, dass sie bei Kollisionen in diesem Geschwindigkeitsspektrum eine optimale Schutzwirkung für einen Fußgänger darstellt und dessen Aufprall möglichst schonend abfängt. Es kann auch günstig sein, wenn an Stelle des aktiven Zurückziehens des Biegebalkens 12 bzw. des Kraftübertragungselements 22 durch die Zugfeder 60 ein rein passives Zurückschieben des Kraftübertragungselements 22 und des Biegebalkens 12 gegen die Reibungskräfte erfolgt. Möglicherweise kann auch ein ganz gezielt vorgegebener Kraftverlauf, beispielsweise durch das Vorsehen von Druckfedern an Stelle der Zugfeder 60 oder anderer elastisch nachgiebiger Elemente, realisiert werden, wodurch eine schonende Verzögerung des Aufpralls des Fußgängers bewirkt wird. Grundsätzlich ist es möglich, an Stelle oder zusätzlich zu der Zugfeder 60 andere Aktuatoren, z.B. Elektromotoren, Magnete, pneumatische oder hydraulische Aktuatoren, vorzusehen. Man kann sich auch eine Unterteilung des Bewegungswegs zwischen den Kraftübertragungselementen 22, 24 vorstellen, so dass ein aktives Zurückziehen lediglich über einen ersten Teil des Bewegungswegs erfolgt und anschließend der Biegebalken und das Kraftübertragungselement 22 ggf. gegen eine vorgegebene Gegenkraft zurückgeschoben werden, etc.

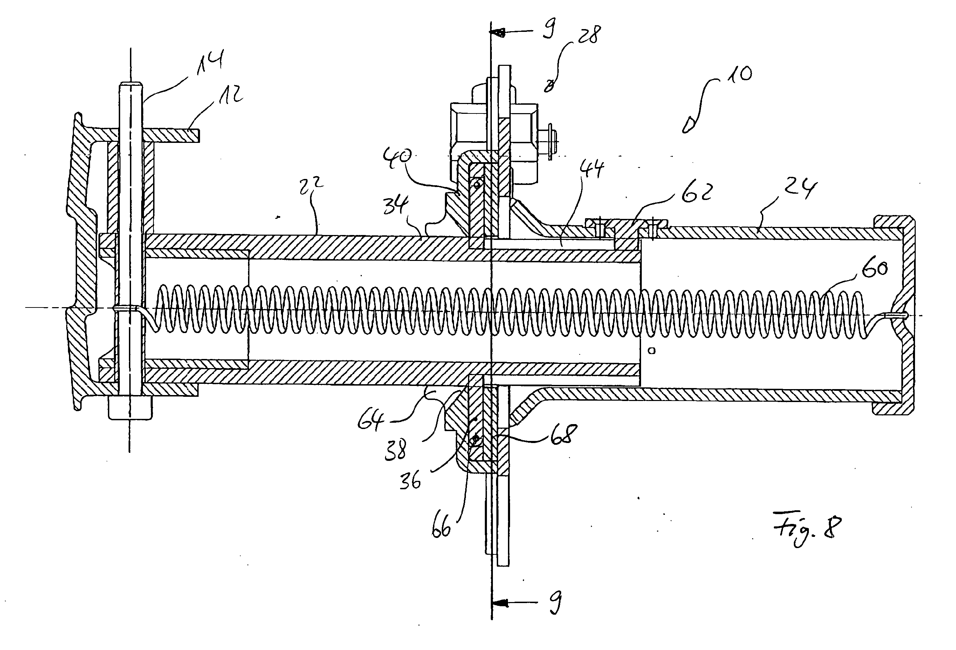

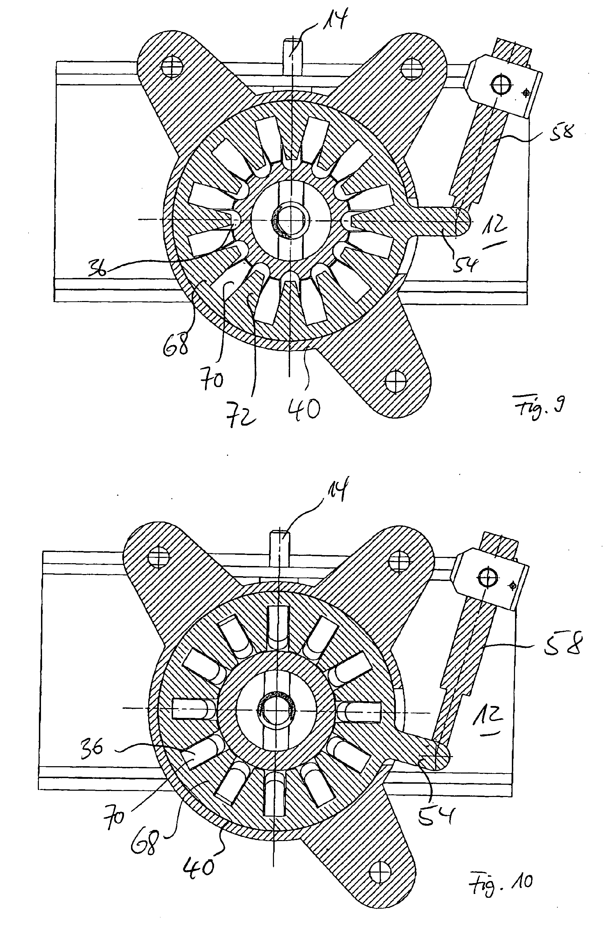

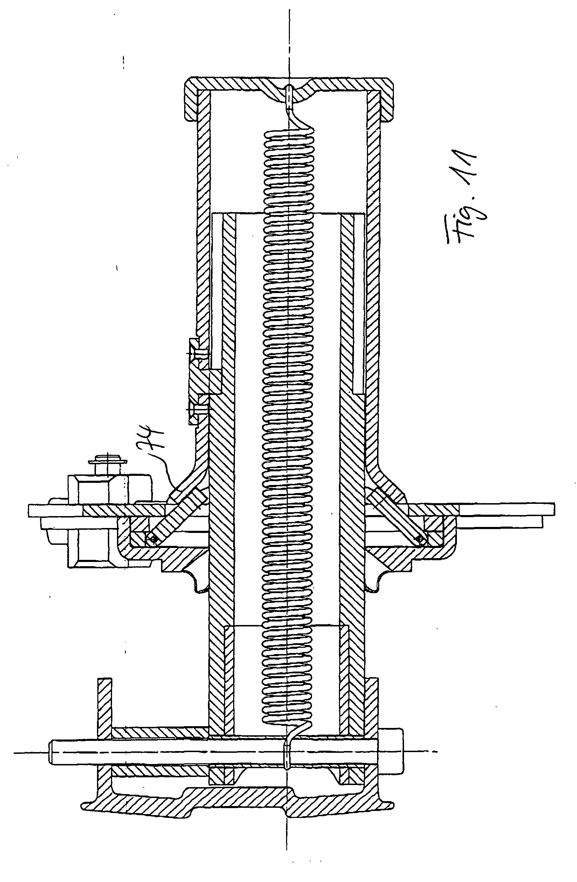

An Hand der Figuren 7 bis 11 wird nachfolgend eine alternative Ausführungsform für einen Stoßfänger dargestellt. Es sei darauf hingewiesen, dass gleiche Bezugszeichen gleiche oder korrespondierende Elemente in den einzelnen Ansichten betreffen. Es sei insbesondere darauf hingewiesen, dass mit Bezug auf eine Ausführungsform gemachte Angaben generell auch für die andere Ausführungsform Anwendung finden können, es sei denn, die spezielle Gestaltung dieser Ausführungsform erlaubt das Übertragen dieser Merkmale und Eigenschaften nicht.

Die Fig. 7 zeigt eine perspektivische Ansicht eines Stoßfängers 10 gemäß der vorliegenden Erfindung. Man erkennt insbesondere die Kraftübertragungselemente 22, 24, den Biegebalken 12 sowie den Bolzen 14, mit dem dieser an dem Kraftübertragungselement 22 angeschlossen ist. Man erkennt auch wieder ein pyrotechnisches Element, welches auf einem Hebel 54 einwirkt und Aktivator der Entsperreinrichtung 30 ist. Es sei darauf hingewiesen, dass in der Darstellung der Fig. 7 aus grafischen Gründen tatsächliche Rundungen durch Flächen angenähert sind, so dass beispielsweise das pyrotechnische Schubelement 58 oder auch der Bolzen 14 etc. dargestellt sind, als wären sie nicht zylinderförmige Elemente, sondern würden einen Vieleck-Querschnitt aufweisen.

Fig. 8 ist ein Längsschnitt durch den Stoßfänger 10. Der Grundaufbau ist ähnlich zu dem Stoßfänger 10 der ersten Ausführungsform. Insbesondere erkennt man ein im Wesentlichen rundes Zerspanelement 34, welches mit Zerspanmessern 36 zusammenwirkt. Man erkennt auch Nuten 44 in dem Zerspanelement, in die die Zerspanschneiden eingreifen. Die Entkopplungseinrichtung 28 weist auch ein Gehäuse 40 auf. In dem Gehäuse ist auch wieder eine abgeschrägte Nut 38 vorgesehen, durch die der Span des Absorbers 20 austreten kann. Zusätzlich - und eine solche Lösung wäre auch bei der Ausführungsform gemäß Figuren 2 bis 6 gut vorstellbar - ist diese Spanauswurfnut 38 lediglich im Bereich der Messer vorgesehen. An mehreren Stellen dazwischen sind Führungsvorsprünge 64 vorgesehen, die ein korrektes Einlaufen des auf die Übertragung des Kraftübertragungselements 22 in den Absorber 20 sicherstellen.

Man erkennt, dass die Zerspanmesser 36 um Achsen 66 drehbar gelagert sind und eine Abstützung 68 in Kraftrichtung hinter den Zerspanmessern 36 vorgesehen ist, die dafür sorgt, dass die Zerspanmesser 36 nicht durch die Zugkraft der Feder 60 zurückklappen. Im Schnitt der Fig. 9 erkennt man, dass die Abstützung 68 in der Art einer Kulissenscheibe ausgebildet ist. In dieser Abstützung 68 sind Ausnehmungen 70 alternierend mit Haltevorsprüngen 72 vorgesehen. In der in Fig. 9 gezeigten Position stützen die Haltevorsprünge 72 die klappbaren Zerspanmesser 36 ab und halten sie in Sperrposition fest. Wird die Entsperreinrichtung 30 und damit das pyrotechnische Schubelement 58 aktiviert, so wird die Abstützscheibe 78 in der in Fig. 9 gezeigten Ausführungsform im Uhrzeigersinn in eine zweite Position verlagert, in der die Ausnehmungen 70 mit den Zerspanmessern 36 fluchtend sind. In dieser Position können die Zerspanmesser 36 durch die Aussparungen 70 "fallen" und entsperren somit das erste und das zweite Kraftübertragungselement 22, 24. Die Zugfeder 60 zieht dann ähnlich der Funktion bei der ersten Ausführungsform das Kraftübertragungselement 22 mit dem Biegebalken 12 zurück. Wie in der Fig. 11 gezeigt, ist ein Zerspanmesseranschlag 74 vorgesehen, um zu verhindern, dass die Zerspanmesser 36 Teile des Gehäuses 40 verbiegen oder beschädigen. Es kann günstig sein, die Abstützscheibe 68 und/oder die Zerspanmesser 36 beispielsweise durch Abschrägen der entsprechenden Kanten derart auszubilden, dass durch ein Zurückdrehen der Abstützscheibe 68 die Zerspanmesser 36 wieder in die in Fig. 8 gezeigte Position zurück bewegt werden können, nachdem die Kraftübertragungselemente 22, 24 in ihre Ausgangsposition verbracht sind.

Nach einem Auslösen der Entsperreinrichtung 30 kann die Rückstellung des Stoßfängers 10 relativ problemlos erfolgen, indem die Kraftübertragungselemente 22, 24 in ihre Ausgangsposition verbracht werden und die Zerspanmesser wieder in Eingriff gebracht werden, so dass sie die Kraftübertragungselemente 22 und 24 in der Ausgangsposition versperren. Der Anschlag 62 kann hierbei zusammen mit einer Nut 44 als Führung dienen, so dass sichergestellt ist, dass die Zerspanmesser 36 in die entsprechenden Nuten 44 korrekt positioniert werden können.

Typischerweise wird eine Rückstellung in der Werkstatt erfolgen, dabei wird auch regelmäßig ein neues pyrotechnisches Schubelement 58 eingesetzt werden. Man kann sich jedoch auch vorstellen, eine Mechanik vorzusehen, mittels derer eine Rückstellung durch den Fahrzeugnutzer erfolgen kann, so dass ein Werkstattaufenthalt nicht erforderlich ist. Das ist insbesondere dann vorteilhaft, wenn an Stelle des pyrotechnischen Schubelements 58 ein anderer wiederverwendbarer Aktuator beispielsweise mit elektromagnetischem, motorischem, pneumatischem, hydraulischem etc., Antrieb vorgesehen ist. Die Verwendung derartiger alternativer Aktuatoren an Stelle des pyrotechnischen Schubelements 58 ist nicht an das Vorhandensein einer Rückstellmechanik gebunden.

Es sei darauf hingewiesen, dass wenngleich bei der vorliegenden Ausführungsform die Zerspanmesser 36 zusammen mit dem Zerspanelement 34 gemeinsam einen Absorber 20 ausbilden, in ähnlicher Weise die Zerspanmesser lediglich als Sperrelemente verwendet werden, können die mit entsprechenden Nuten 44 in dem Kraftübertragungselement 22 zusammenwirken. Das ist insbesondere dann günstig, wenn Teile der Karosserie gezielt als Absorber 20 ausgebildet sind oder wenn ein spezieller, separater Absorber 20 verwendet werden soll.

## Patentansprüche

1. Stoßfänger (10) zum Anschluss an eine tragende Struktur (18) einer Kraftfahrzeugkarosserie und zum Übertragen einer Kraft im Wesentlichen in der Richtung der Längsachse des Fahrzeugs, aufweisend eine Entkopplungseinrichtung (28) mit einem ersten und einem zweiten in Kraftrichtung relativ zueinander verlagerbaren Kraftübertragungselement (22, 24), einer Sperreinrichtung (26), die das erste und das zweite Kraftübertragungselement (22, 24) relativ zueinander versperrt, und einer an der Sperreinrichtung (26) angeschlossenen Entsperreinrichtung (30), welche die Versperrung zwischen dem ersten und dem zweiten Kraftübertragungselement (22, 24) aufhebt und eine Relativbewegung zwischen beiden zulässt.

2. Stoßfänger (10) nach Anspruch 1, ferner aufweisend eine Rückzieheinrichtung, die zwischen dem ersten und dem zweiten Kraftübertragungselement (22, 24) derart angeschlossen ist, dass sie nach dem Aufheben der Sperrung zwischen dem ersten und dem zweiten Kraftübertragungselement (22, 24) aktiv eine Relativbewegung zwischen beiden bewirkt.

3. Stoßfänger (10) nach Anspruch 2, wobei die Rückzieheinrichtung eine vorgespannte Feder (60) ist.

4. Stoßfänger (10) nach einem der Ansprüche 1 bis 3, ferner aufweisend einen Absorber (20), wobei die Entkopplungseinrichtung (28) ein Bestandteil des Absorbers (20) ist.

5. Stoßfänger (10) nach Anspruch 4, wobei der Absorber (20) ein Zerspanelement (34) und ein mit diesem in Eingriff befindliches Zerspanmesser (36) aufweist, wobei das Zerspanelement (34) ein Bestandteil eines Kraftübertragungselements (22) ist und das Zerspanmesser (36) ein Bestandteil der Sperreinrichtung (26) ist.

6. Stoßfänger (10) nach Anspruch 5, aufweisend ein längliches Zerspanelement (18) und mehrere darum herum angeordnete Zerspanmesser (30), die in einer Führung (46) rechtwinklig zur Längsachse des Zerspanelements (34) verlagerbar angeordnet sind und an die Entsperreinrichtung (30) angeschlossen sind.

7. Stoßfänger (10) nach Anspruch 6, wobei die Entsperreinrichtung (30) eine Steuerkurvenscheibe (52) aufweist, in der mit den Zerspanmessern (36) zusammenwirkende Steuerkurven (50) vorgesehen sind, die derart ausgebildet sind, dass ein Verlagern der Steuerkurvenscheibe (52) die Zerspanmesser (36) aus einer Sperrposition in eine Entsperrposition und umgekehrt verlagern kann.

8. Stoßfänger (10) nach Anspruch 5, aufweisend ein längliches Zerspanelement (34) und mehrere darum herum angeordnete Zerspanmesser (36), die von einer Abstützung (68) in Sperrposition gegen die Kraftrichtung gehalten sind, wobei die Entsperreinrichtung (30) derart an die Abstützung (68) angeschlossen ist, dass eine Betätigung der Entsperreinrichtung (20) die Abstützung (68) derart verlagert, dass die Zerspanmesser (36) in Kraftrichtung freigegeben sind.

9. Stoßfänger (10) nach einem der Ansprüche 1 bis 8, wobei die Entsperreinrichtung (30) ein pyrotechnisches Schubelement (58) aufweist.

10. Stoßfängerbaugruppe, aufweisend mindestens zwei Stoßfänger (10) gemäß einem der Ansprüche 1 bis 9, einen Biegebalken (12) zum Anschluss an die karosseriefernen, freien Enden der Stoßfänger (10) und eine Stoßfängerabdeckung (8).

11. Kraftfahrzeug (2) aufweisend einen Stoßfänger (10) gemäß einem der Ansprüche 1 bis 9.

12. Kraftfahrzeug (2) nach Anspruch 11, aufweisend mindestens zwei Stoßfänger (10) und einen mit dem karosseriefernen, freien Ende (32) der Stoßfänger (10') verbundenen Biegebalken (12).

13. Kraftfahrzeug (2) nach Anspruch 11 oder 12, ferner aufweisend eine Stoßfängerabdeckung (8).
